# EUROPEAN PATENT APPLICATION

(11) **EP 4 354 400 A1**
(43) Date of publication of application: **17.04.2024**
(21) Application number: 22819809.9
(22) Date of filing: 14.02.2022
(51) Int. Cl.: G06T 19/00, G06T 7/55, G06T 7/70

(54) **INFORMATION PROCESSING DEVICE, INFORMATION PROCESSING METHOD, AND PROGRAM**

(30) Priority: 08.06.2021 JP 2021095899
(71) Applicant: Sony Group Corporation, Tokyo 108-0075 (JP)
(72) Inventor: SAKAI, Yuko, Tokyo 108-0075 (JP)
(74) Representative: D Young & Co LLP
(86) International application number: PCT/JP2022/005655
(87) International publication number: WO 2022/259618

(57) **Abstract**

A video processing apparatus (information processing apparatus) includes: a tracking processing unit (tracking unit) that performs tracking of a region having a similar pixel pattern among a plurality of frame images included in a reference video (first video) in which a subject (first subject) is captured; and a camerawork estimation unit (first estimation unit) that estimates camerawork for the reference video on the basis of a result of the tracking by the tracking processing unit.

## Description

### Field

The present invention relates to an information processing apparatus, an information processing method, and a program.

### Background

In recent years, general users create videos that imitate videos being played in artist's promotion video (PV), television commercials, and the like using various video posting applications and disclose the videos on the Internet, for example.

In addition, there is known a technique of generating camerawork with less discomfort when a subject is observed from a free viewpoint (for example, Patent Literature 1).

### Citation List

### Patent Literature

Patent Literature 1: JP 2020-144456 A

### Summary

### Technical Problem

However, since camerawork for a video to be imitated is unknown, it is difficult to accurately imitate the video. In addition, the technique disclosed in Patent Literature 1 described above is a technique for generating camerawork, and a technique for estimating camerawork from a given video is not known.

The present disclosure proposes, with respect to an acquired video, an information processing apparatus, an information processing method, and a program capable of estimating camerawork for the acquired video.

### Solution to Problem

In order to solve the above problem, an information processing apparatus according to one embodiment of the present disclosure includes: a tracking unit configured to perform tracking of a region having a similar pixel pattern among a plurality of frame images included in a first video in which a first subject is captured; and a first estimation unit configured to estimate camerawork for the first video on a basis of a result of the tracking by the tracking unit.

### Brief Description of Drawings

FIG. 1 is a diagram illustrating an outline of a flow of processing of generating a 3D model of a subject.
FIG. 2 is a diagram illustrating a method of estimating a skeleton of a subject.
FIG. 3 is a hardware block diagram illustrating an example of a hardware configuration of a video processing apparatus according to an embodiment.
FIG. 4 is a diagram illustrating a method of estimating camerawork and person information from a reference video.
FIG. 5 is a diagram illustrating a method of linking a subject detected from a reference video to a subject captured in a multi-viewpoint image.
FIG. 6 is a diagram illustrating a method of setting a virtual viewpoint for observing a subject to be imitated.
FIG. 7 is a functional block diagram illustrating an example of a functional configuration of the video processing apparatus according to the embodiment.
FIG. 8 is a flowchart illustrating an example of an overall flow of processing performed by the video processing apparatus according to the embodiment.
FIG. 9 is a flowchart illustrating an example of a flow of imaging information estimation processing performed by the video processing apparatus according to the embodiment.
FIG. 10 is a diagram illustrating an example of a storage form of information estimated by the imaging information estimation processing.
FIG. 11 is a flowchart illustrating an example of a flow of person correlation estimation processing performed by the video processing apparatus according to the embodiment.
FIG. 12 is a flowchart illustrating an example of a flow of virtual viewpoint setting processing performed by the video processing apparatus according to the embodiment.
FIG. 13 is a flowchart illustrating an example of a flow of rendering processing performed by the video processing apparatus according to the embodiment.
FIG. 14 is a diagram illustrating processing performed by a video processing apparatus according to a modification of the embodiment.

### Description of Embodiments

Hereinafter, embodiments of the present disclosure will be described in detail on the basis of the drawings. Note that, in the following embodiments, the same parts are denoted by the same reference signs, and redundant description will be omitted.

Note that the present disclosure will be described in the following order of items.
1. Embodiments of the Present Disclosure
   1-1. Explanation of Premise - Generation of 3D Model
   1-2. Explanation of Premise - Generation of Volumetric Video
   1-3. Explanation of Premise - Skeleton Estimation
   1-4. Hardware Configuration of Video Processing Apparatus
   1-5. Method of Estimating Camerawork and Person Information
   1-6. Method of Associating Person Captured in Reference Video with Person Captured in Multi-viewpoint Image
   1-7. Method of Setting Virtual Viewpoint
   1-8. Functional Configuration of Video Processing Apparatus
   1-9. Overall Flow of Processing Performed by Video Processing Apparatus
   1-10. Flow of Imaging Information Estimation Processing
   1-11. Flow of Person Correlation Estimation Processing
   1-12. Flow of Virtual Viewpoint Setting Processing
   1-13. Flow of Rendering Processing
   1-14. Effects of Embodiment
   1-15. Modification of Embodiment
   1-16. Effects of Modification of Embodiment
2. Application Examples of Present Disclosure
   2-1. Production of Content
   2-2. Experience in Virtual Space
   2-3. Communication with Remote Location
   2-4. Others

### (1. Embodiments of the Present Disclosure)

A video processing apparatus 10 according to an embodiment of the present disclosure will be described. The video processing apparatus 10 estimates camerawork C when a subject 80 captured in an acquired reference video H(t) is imaged. The reference video H(t) may be a two-dimensional video actually imaged by a camera or the like, or may be a computer graphics (CG) video. In addition, the reference video H(t) may be a volumetric video generated on the basis of a 3D model of the subject 80. In addition, the video processing apparatus 10 generates a virtual video obtained by imaging a 3D model 90M of a subject 90 generated from a multi-viewpoint image I(t) of the subject 90 with the camerawork C. Note that, for example, it is assumed that the subject 80 and the subject 90 dance substantially the same dance in accordance with the same music. In addition, the subject 80 and the subject 90 include one or more persons. However, the number of persons included in the subject 80 and the number of persons included in the subject 90 may not match. Note that the video processing apparatus 10 is an example of an information processing apparatus in the present disclosure. In addition, the subject 80 is an example of a first subject in the present disclosure, and the subject 90 is an example of a second subject in the present disclosure.

The processing performed by the video processing apparatus 10 includes known processing of generating the 3D model 90M of the subject 90 using the multi-viewpoint image I(t), known processing of generating a virtual video (volumetric video) obtained by observing the generated 3D model 90M from a virtual viewpoint, and known processing of estimating the posture (skeleton) of the subject 80 shown in the image. Next, the outline of these processing will be described.

### [1-1. Explanation of Premise - Generation of 3D Model]

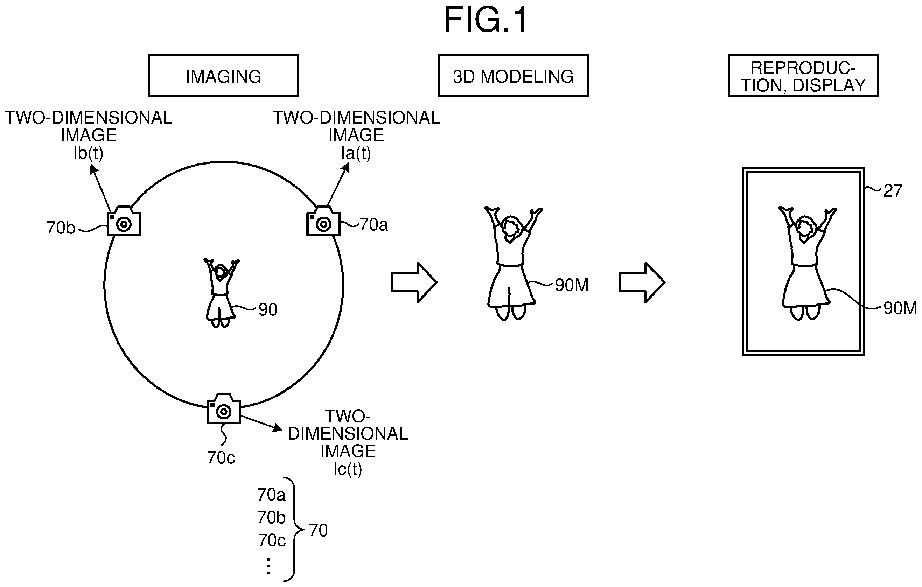

First, a flow of processing in which the video processing apparatus 10 to which the present disclosure is applied generates the 3D model 90M of the subject 90 will be described with reference to FIG. 1. FIG. 1 is a diagram illustrating an outline of a flow of processing of generating a 3D model of a subject.

As illustrated in FIG. 1, the 3D model 90M of the subject 90 is performed through imaging of the subject 90 by a plurality of cameras 70 (70a, 70b, 70c) and processing of generating the 3D model 90M having 3D information of the subject 90 by 3D modeling.

As illustrated in FIG. 1, the plurality of cameras 70 are arranged outside the subject 90, the plurality of cameras 70 facing the direction of the subject 90 so as to surround the subject 90 existing in the real world. The background of the subject 90 is, for example, a uniform background with a single color such as green back or blue back. FIG. 1 illustrates an example in which the number of cameras is three, and the cameras 70a, 70b, and 70c are each arranged around the subject 90. Note that the number of the cameras 70 is not limited to three, and a larger number of cameras may be provided.

In addition, camera parameters 71 (71a, 71b, 71c) of the cameras 70 (70a, 70b, 70c) are acquired in advance by performing calibration. The camera parameters 71a, 71b, and 71c include internal parameters and external parameters of the cameras 70a, 70b, and 70c. The internal parameters are parameters including the optical centers and the focal lengths of the cameras 70a, 70b, and 70c. The external parameters are parameters for specifying the installation positions of the cameras 70a, 70b, and 70c. The camera parameters 71a, 71b, and 71c are obtained by analyzing (calibrating) images obtained when targets with shapes, sizes, and installation positions that are known are imaged by the cameras 70a, 70b, and 70c.

From different viewpoints, 3D modeling of the subject 90 is performed by the three cameras 70a, 70b, and 70c using the multi-viewpoint image I(t) imaged in synchronization and the camera parameters 71. Note that the multi-viewpoint image I(t) includes a two-dimensional image Ia(t) imaged by the camera 70a, a two-dimensional image Ib(t) imaged by the camera 70b, and a two-dimensional image Ic(t) imaged by the camera 70c. With this 3D modeling, the 3D model 90M of the subject 90 is generated in units of frames of images imaged by the three cameras 70a, 70b, and 70c.

The 3D model 90M is generated, for example, by cutting out the three-dimensional shape of the subject 90 using images (for example, silhouette images from a plurality of viewpoints) from a plurality of viewpoints using a visual hull.

The 3D model 90M expresses shape information representing the surface shape of the subject 90, for example, with polygon mesh data M expressed by a connection between a vertex (Vertex) and a vertex. The polygon mesh data M includes, for example, three-dimensional coordinates of vertices of a mesh and index information indicating which vertices are combined to form a triangle mesh. Note that a method of expressing the 3D model is not limited thereto, and the 3D model may be described by what is called a point cloud expression method expressed by point position information. In addition, color information data representing the color of the subject 90 is generated as texture information T in a form of being linked to these 3D shape data. The texture information T includes a view independent texture in which a color is constant when viewed from any direction and a view dependent texture in which a color changes depending on a viewing direction.

Since the generated 3D model 90M is often used by a computer different from the computer that has generated the 3D model 90M, the 3D model 90M is compressed (encoded) into a format suitable for transmission and accumulation. Then, the compressed 3D model 90M is transmitted to a computer that uses the 3D model 90M.

### [1-2. Explanation of Premise - Generation of Volumetric Video]

Upon receiving the transmitted 3D model 90M, the computer decompresses (decodes) the compressed 3D model 90M. Then, a video (volumetric video) of the subject 90 observed from any virtual viewpoint is generated using the polygon mesh data M of the decompressed 3D model 90M and the texture information T.

Specifically, the polygon mesh data M of the 3D model 90M is projected at any camera viewpoint, and texture mapping that pasts the texture information T representing color and pattern to the projected polygon mesh data M is performed.

The generated image is displayed on a display device 86 (not illustrated) placed in the viewing environment of the user. The display device 86 is, for example, a head mounted display, a spatial display, a mobile phone, a television, a PC, or the like.

Note that, to simplify the description, the video processing apparatus 10 of the present embodiment will be described assuming that the generation of the 3D model 90M and the generation of the volumetric video are executed by the same computer.

### [1-3. Explanation of Premise - Skeleton Estimation]

Next, a method of estimating a 2D skeleton 82 of a person from the image of the person who is the subject 90 will be described. The 2D skeleton 82 represents the posture of the subject 90.

To estimate the 2D skeleton 82, for example, a silhouette image of a person and segments representing the torso and the limbs generated from the silhouette image are stored in advance in a database. Then, the shape of the skeleton, the position of the joint, the positions of the hand tip, the foot tip, the face, and the like are estimated by collating the captured image with the database.

In addition, an example in which similar processing is performed using a neural network generated by machine learning using deep learning is also known.

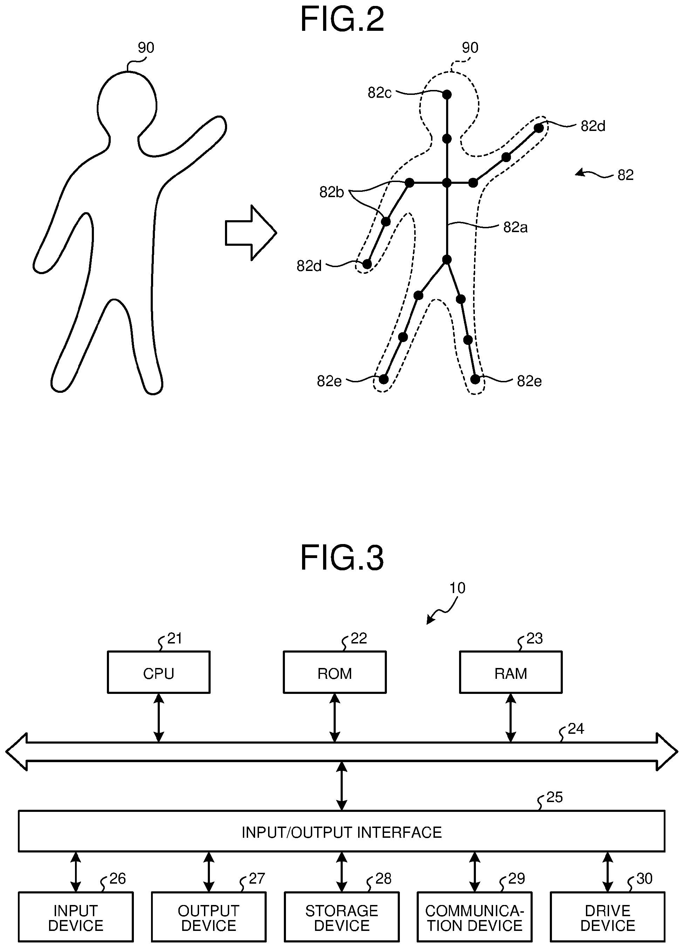

By performing such skeleton estimation, as illustrated in FIG. 2, the position and shape of the 2D skeleton 82 are estimated from the image of the subject 90. The 2D skeleton 82 includes a bone 82a, a joint 82b, a head 82c, a hand tip 82d, and a foot tip 82e.

The bone 82a is a link that connects structures (Joint 82b, head 82c, hand tip 82d, foot tip 82e) connected to each other.

The joint 82b is a connection point of two different bones 82a.

The head 82c indicates a position corresponding to the head of the subject 90.

The hand tip 82d and the foot tip 82e indicate positions corresponding to the hand tip and the foot tip of the subject 90.

### [1-4. Hardware Configuration of Video Processing Apparatus]

A hardware configuration of the video processing apparatus 10 will be described with reference to FIG. 3. FIG. 3 is a hardware block diagram illustrating an example of a hardware configuration of a video processing apparatus according to the embodiment.

In the computer illustrated in FIG. 3, a CPU 21, a ROM 22, and a RAM 23 are connected to each other via a bus 24. An input/output interface 25 is also connected to the bus 24. An input device 26, an output device 27, a storage device 28, a communication device 29, and a drive device 30 are connected to the input/output interface 25.

The input device 26 includes, for example, a keyboard, a mouse, a microphone, a touch panel, an input terminal, and the like. The output device 27 includes, for example, a display, a speaker, an output terminal, and the like. The display device 86 described above is an example of the output device 27. The storage device 28 includes, for example, a hard disk, a RAM disk, a nonvolatile memory, and the like. The communication device 29 includes, for example, a network interface or the like. The drive device 30 drives a removable medium such as a magnetic disk, an optical disk, a magneto-optical disk, or a semiconductor memory.

In the computer configured as described above, the CPU 21 loads, for example, a program stored in the storage device 28 into the RAM 23 via the input/output interface 25 and the bus 24 and executes the program, thereby performing the above-described series of processing. Data and the like necessary for the CPU 21 to execute various processing are also appropriately stored in the RAM 23.

The program executed by the computer can be applied, for example, by being recorded in a removable medium as a package medium or the like. In this case, the program can be installed in the storage device 28 via the input/output interface by attaching the removable medium to the drive device 30.

In addition, this program can also be provided via a wired or wireless transmission medium such as a local area network, the Internet, or digital satellite broadcasting. In this case, the program can be received by the communication device 29 and installed in the storage device 28.

### [1-5. Method of Estimating Camerawork and Person Information]

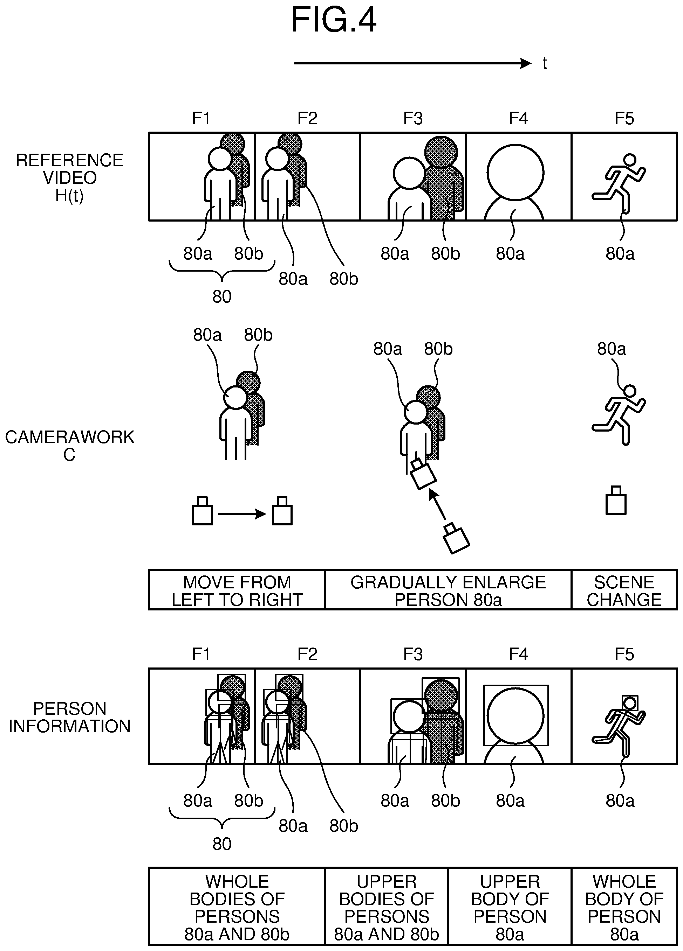

A method of estimating the camerawork C when the reference video H(t) is acquired and a method of estimating person information captured in the reference video H(t) will be described with reference to FIG. 4. FIG. 4 is a diagram illustrating a method of estimating camerawork and person information from a reference video.

As illustrated in FIG. 4, the reference video H(t) is composed of a plurality of frame images (F1, F2, F3, F4, F5,...) continuous along time t. In the example of FIG. 4, two persons 80a and 80b are captured as the subject 80 in the frame image F1 to the frame image F3. In addition, one person 80a is captured as the subject 80 in the frame images F4 and F5. Note that, in the present embodiment, it is assumed that the reference video H(t) is a video imaged by a camera 60 (not illustrated) with a camera parameter that is unknown. Note that the reference video H(t) is an example of a first video in the present disclosure.

The video processing apparatus 10 performs motion tracking on the reference video H(t). The motion tracking is processing of obtaining a movement vector by tracking a region having a similar pixel pattern between adjacent frame images. The similar pixel pattern is, for example, an arrangement pattern of pixels characterizing a region of an image, such as a luminance distribution pattern (light and dark pattern) or a color pattern of the image. More specifically, the motion tracking is processing of performing matching processing of a region between adjacent frame images and determining a region having a similar pixel pattern as a region before and after movement.

In the example of FIG. 4, the motion tracking can be performed from the frame image F1 to the frame image F4. Then, the motion tracking cannot be performed between the frame image F4 and the frame image F5. In a case where the motion tracking cannot be performed, the video processing apparatus 10 determines that the scene is a discontinuous scene, that is, a scene change occurs.

The motion tracking detects a movement vector between frame images generated with the camerawork C. The movement vector is also called an optical flow. Note that, since there is a possibility that the subject 80 moves in a direction unrelated to the camerawork C, it is desirable to detect the subject from each frame image and perform the motion tracking only on the background region excluding the region of the subject before performing the motion tracking. The video processing apparatus 10 estimates the camerawork C by analyzing the distribution state of the movement vectors of the background region of the frame image detected by the motion tracking. Of course, in a case where it can be regarded that the subject is stationary, the movement vector may be detected including the region of the subject.

The video processing apparatus 10 creates a histogram of the movement vectors obtained as a result of the motion tracking, and performs frequency analysis of the directions and sizes of the movement vectors. By performing the frequency analysis of the movement vector, it is possible to estimate the camerawork C when the reference video H(t) is acquired.

For example, when the camera performs translational movement along the subject, the movement vectors obtained as a result of the motion tracking have components in substantially the same direction and substantially the same size over the whole screen. In such a case, the video processing apparatus 10 estimates that the camera has performed translational movement along the subject. For example, in FIG. 4, it is estimated that the camerawork C in which the camera performs translational movement from left to right occurs between the frame image F1 and the frame image F2.

In addition, in a case where the camera approaches the subject or zooms up the subject, the movement vectors obtained as a result of the motion tracking are radially distributed. In FIG. 4, it is estimated that the camerawork C in which the camera approaches the person 80a occurs between the frame image F2 and the frame image F4.

In addition, although not illustrated, in a case where the movement vectors are distributed in a spiral shape, the video processing apparatus 10 estimates that the camerawork C for rotating the camera around the optical axis has occurred.

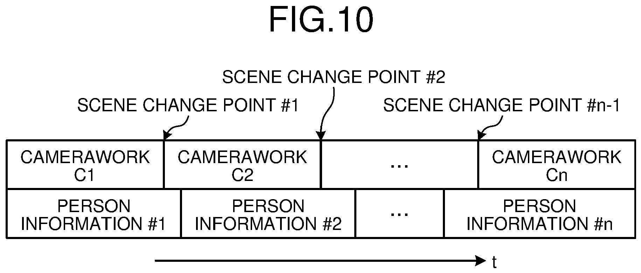

The video processing apparatus 10 performs estimation of such camerawork C on the reference video H(t). Then, the video processing apparatus 10 stores the estimated camerawork C (see FIG. 10).

The video processing apparatus 10 further estimates the 2D skeleton 82 of the person captured in each of the frame images F1, F2, F3, F4, and F5. The estimation of the 2D skeleton 82 is performed by the method described above.

In the example of FIG. 4, it is estimated that the whole bodies of the person 80a and the person 80b are captured in the frame images F1 and F2. In addition, it is estimated that the upper bodies of the person 80a and the person 80b are captured in the frame image F3. Then, it is estimated that the upper body of the person 80a is captured in the frame image F4. Note that it is determined that the whole body of the person 80a is captured in the frame image F5.

The video processing apparatus 10 stores the result of specifying the person estimated in each frame image (result of labeling the detected person), the posture information of the detected person (face orientation and skeleton shape), and the size of the person captured in the frame image (whole body, half body, or the like) as the person information (see FIG. 10).

### [1-6. Method of Linking Person Captured in Reference Video to Person Captured in Multi-viewpoint Image]

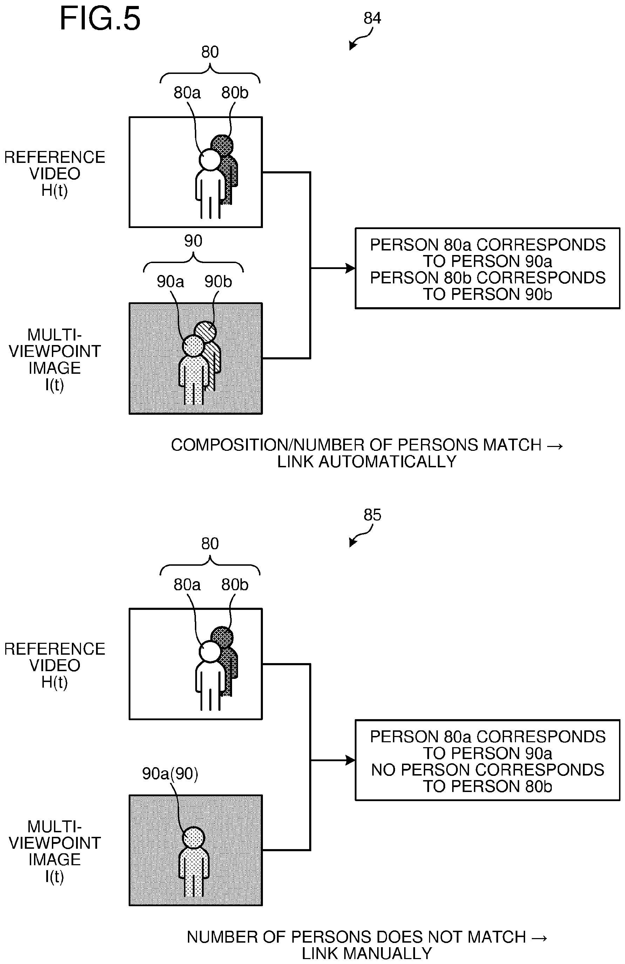

A method of linking the subject 80 captured in the reference video H(t) to the subject 90 captured in the multi-viewpoint image I(t) will be described with reference to FIG. 5. FIG. 5 is a diagram illustrating a method of linking a subject detected from a reference video to a subject captured in a multi-viewpoint image. Note that, in the following description, linking is also referred to as associating.

The video processing apparatus 10 acquires the multi-viewpoint image I(t) in which the subject 90 who is in the same pose as the subject 80 captured in the reference video H(t) is considered to be captured. Specifically, images having the same elapsed time from the start of imaging may be acquired. Note that, since both the reference video H(t) and the multi-viewpoint image I(t) have the same music information, the video processing apparatus 10 may acquire the multi-viewpoint image I(t) at the time corresponding to the time t at which the reference video H(t) is acquired, for example, by searching for the multi-viewpoint image I(t) having a sound signal that is substantially the same as the sound signal of the music playing in the background of the reference video H(t).

Since the positional relationship between the cameras 70 that have imaged the multi-viewpoint image I(t), and the subject 90 and the positional relationship between the camera 60 and the subject 80 when the reference video H(t) is acquired do not completely match, the video processing apparatus 10 links the subject 80 to the subject 90 by comparing the arrangement of the subject 80 captured in the reference video H(t) and the arrangement of the subject 90 captured in the multi-viewpoint image I(t).

A specific example 84 illustrated in FIG. 5 is an example of the reference video H(t) and the multi-viewpoint image I(t) acquired in this manner. The video processing apparatus 10 estimates the skeleton of the person on the multi-viewpoint image I(t). Note that it is assumed that the skeleton of subject 80 captured in the reference video H(t) has already been estimated as described above, and that the video processing apparatus 10 has stored the estimated person information.

The video processing apparatus 10 compares the person information of the subject 80 captured in the reference video H(t) with the person information of the subject 90 captured in the multi-viewpoint image I(t) to determine whether the arrangement of the persons and the number of persons each match.

In the specific example 84, the video processing apparatus 10 determines that the arrangement of the persons and the number of persons each match. Then, the video processing apparatus 10 determines that the person 80a in the reference video H(t) corresponds to the person 90a in the multi-viewpoint image I(t). In addition, the video processing apparatus 10 determines that the person 80b in the reference video H(t) corresponds to the person 90b in the multi-viewpoint image I(t).

At this time, the video processing apparatus 10 automatically links the person 80a to the person 90a, and the person 80b to the person 90b. Then, the video processing apparatus 10 stores the linked result.

A specific example 85 illustrated in FIG. 5 is another example of the reference video H(t) and the multi-viewpoint image I(t) acquired. Also in this case, the video processing apparatus 10 compares the person information of the subject 80 captured in the reference video H(t) with the person information of the subject 90 captured in the multi-viewpoint image I(t) to determine whether the arrangement of the persons and the number of persons each match.

In the specific example 85, the video processing apparatus 10 determines that the number of subjects 80 in the reference video H(t) does not match the number of subjects 90 in the multi-viewpoint image I(t). Then, the video processing apparatus 10 causes the operator of the video processing apparatus 10 to manually link the correspondence relationship between the subject 80 captured in the reference video H(t) and the subject 90 captured in the multi-viewpoint image I(t). The operator of the video processing apparatus 10 manually links the person 80a to the person 90a. Then, the video processing apparatus 10 stores the linked result. Note that, in the manual linkage of the persons, for example, the reference video H(t) and the multi-viewpoint image I(t) may be displayed side by side on the display device 86, and the operator of the video processing apparatus 10 may designate the corresponding person by operating the touch panel or the mouse.

### [1-7. Method of Setting Virtual Viewpoint]

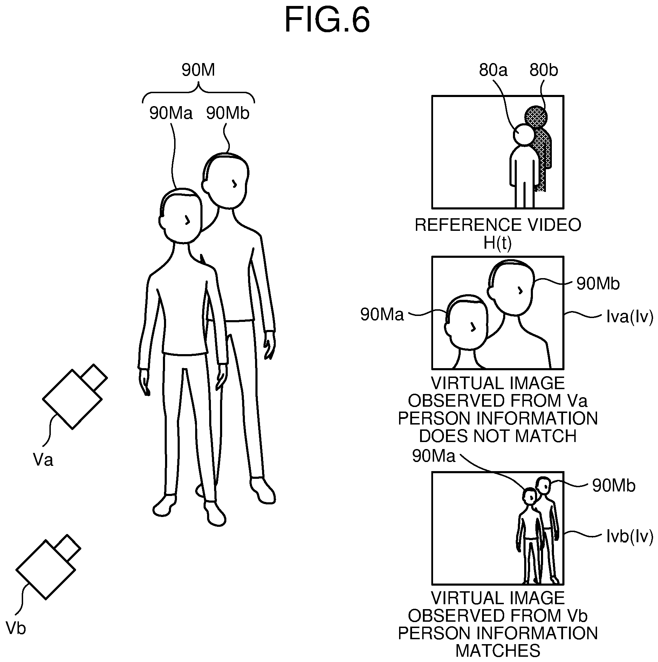

A method of setting a virtual viewpoint V for observing the 3D model 90M from the camerawork C and the person information estimated from the reference video H(t), and the 3D model 90M of the subject 90 captured in the multi-viewpoint image I(t) will be described with reference to FIG. 6. FIG. 6 is a diagram illustrating a method of setting a virtual viewpoint for observing a subject to be imitated.

It is assumed that the video processing apparatus 10 estimates the camerawork C and the person information described with reference to FIG. 4 from the reference video H(t) .

It is also assumed that the video processing apparatus 10 generates 3D models 90Ma and 90Mb of the respective persons for the multi-viewpoint image I(t) in which two persons 90a and 90b are captured in the multi-viewpoint image I(t).

The video processing apparatus 10 searches for the virtual viewpoint V in which the arrangement of the persons 90a and 90b (3D models 90Ma, 90Mb) matches the arrangement in the reference video H(t) illustrated in FIG. 6. At that time, the video processing apparatus 10 generates a virtual image Iv in which the persons 90a and 90b are observed from each virtual viewpoint V while moving the position of the virtual viewpoint V. Then, the video processing apparatus 10 compares the generated virtual image Iv with the reference video H(t) to sequentially determine whether the arrangement of the persons 80a and 80b in the reference video H(t) is the same as the arrangement of persons 90a, 90b in the generated virtual image Iv. Then, the video processing apparatus 10 selects the virtual image Iv in which the arrangement of the person is the closest. Note that the virtual image Iv is an example of a second video in the present disclosure.

For example, in the example of FIG. 6, the video processing apparatus 10 first sets a virtual viewpoint Va. Then, the video processing apparatus 10 generates a virtual image Iva obtained by observing the 3D models 90Ma and 90Mb from the virtual viewpoint Va. The video processing apparatus 10 compares the generated virtual image Iva with the reference video H(t), and determines that the arrangement of the persons is different. Next, the video processing apparatus 10 generates a virtual image Ivb obtained by observing the 3D models 90Ma and 90Mb from a virtual viewpoint Vb different from the virtual viewpoint Va. Then the video processing apparatus 10 compares the generated virtual image Ivb with the reference video H(t), and determines that the arrangement of the persons matches. In this way, the video processing apparatus 10 sets the initial position of the virtual viewpoint V. Note that, to efficiently set the initial position of the virtual viewpoint V, the position of the virtual viewpoint V to be set first is desirably a position at which the multi-viewpoint image I(t) linked to the reference video H(t) is observed.

Thereafter, the video processing apparatus 10 sequentially generates the virtual image Iv obtained by observing the 3D models 90Ma and 90Mb of the persons 90a and 90b from the virtual viewpoint V while moving the position of the virtual viewpoint V according to the estimated camerawork C.

### [1-8. Functional Configuration of Video Processing Apparatus]

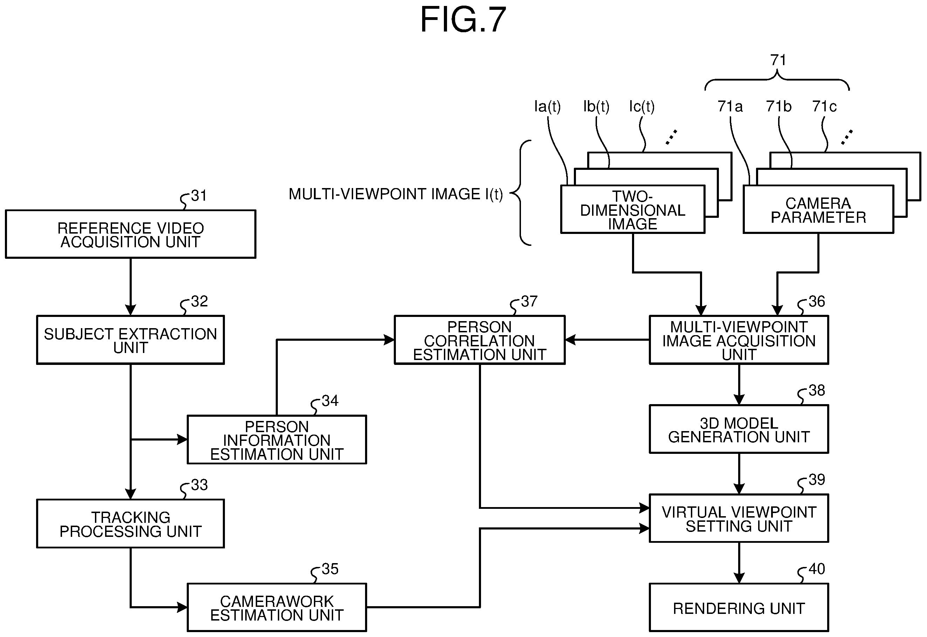

A functional configuration of the video processing apparatus 10 will be described with reference to FIG. 7. FIG. 7 is a functional block diagram illustrating an example of a functional configuration of the video processing apparatus according to the embodiment.

A reference video acquisition unit 31 acquires a reference video H(t) (first video) that needs to be imitated.

A subject extraction unit 32 extracts the subject 80 (first subject) from a plurality of frame images included in the reference video H(t) (first video) acquired by the reference video acquisition unit 31. Note that the subject extraction unit 32 is an example of an extraction unit in the present disclosure.

A tracking processing unit 33 tracks (tracking) a region having a similar pixel pattern among the plurality of frame images included in the reference video H(t) (first video) in which the subject 80 (first subject) is captured. Note that the tracking processing unit 33 is an example of a tracking unit in the present disclosure.

A person information estimation unit 34 estimates the arrangement and the posture of the subject 80 (first subject) from the frame images included in the reference video H(t) (first video). The person information estimation unit 34 estimates, for example, the arrangement and the posture of the subject 80 extracted by the subject extraction unit 32. Note that the person information estimation unit 34 is an example of a second estimation unit in the present disclosure.

A camerawork estimation unit 35 estimates the camerawork C for the reference video H(t) (first video) on the basis of the result of the tracking by the tracking processing unit 33. More specifically, the camerawork estimation unit 35 estimates at least one of a change in the viewpoint position, a change in the line-of-sight direction, and a change in the viewing angle of the camera 60 when the reference video H(t) is imaged on the basis of the result of the tracking by the tracking processing unit 33. Note that the camerawork estimation unit 35 is an example of a first estimation unit in the present disclosure.

A multi-viewpoint image acquisition unit 36 acquires a multi-viewpoint image I(t) obtained by imaging the subject 90 (second subject) from the cameras 70 placed at a plurality of viewpoints. In addition, the multi-viewpoint image acquisition unit 36 acquires the camera parameters 71 of the cameras 70. Note that the multi-viewpoint image acquisition unit 36 is an example of an acquisition unit in the present disclosure.

A person correlation estimation unit 37 estimates a correspondence relationship between the arrangement and the posture of the subject 80 (first subject) estimated by the person information estimation unit 34 (second estimation unit) and the arrangement and the posture of the subject 90 in the multi-viewpoint image I(t) obtained by imaging the subject 90 (second subject) from a plurality of viewpoints. More specifically, the person correlation estimation unit 37 estimates the correspondence relationship between the subject 80 and the subject 90 on the basis of the skeleton of the subject 80 and the skeleton of the subject 90. Note that the person correlation estimation unit 37 is an example of a correlation estimation unit in the present disclosure.

A 3D model generation unit 38 generates the 3D model 90M of the subject 90 from the multi-viewpoint image I(t) obtained by imaging the subject 90 (second subject) from the plurality of viewpoints and the camera parameters 71. As described above, the 3D model 90M is described by the polygon mesh data M and the texture information T.

A virtual viewpoint setting unit 39 sets a virtual viewpoint V moving along the camerawork C estimated by the camerawork estimation unit 35 (first estimation unit) such that the subject 90 (second subject) approaches the arrangement and posture of the subject 80 (first subject) estimated by the person information estimation unit 34 (second estimation unit). Note that the virtual viewpoint setting unit 39 is an example of a setting unit in the present disclosure.

A rendering unit 40 generates the virtual image Iv obtained by observing the 3D model 90M of the subject 90 (second subject) from the virtual viewpoint V set by the virtual viewpoint setting unit 39 (setting unit). The generated virtual image Iv is displayed on the display device 86, for example. Note that the rendering unit 40 is an example of a video generation unit in the present disclosure.

### [1-9. Overall Flow of Processing Performed by Video Processing Apparatus]

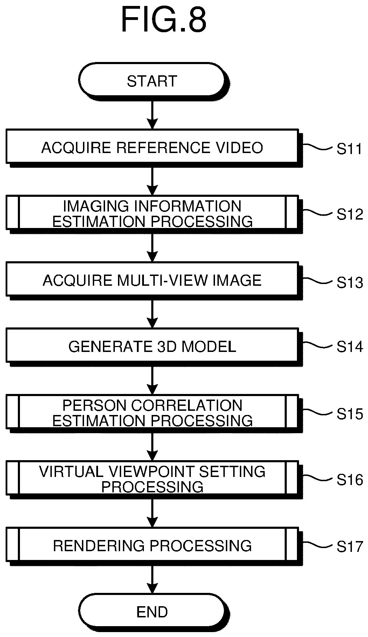

An overall flow of processing performed by the video processing apparatus 10 will be described with reference to FIG. 8. FIG. 8 is a flowchart illustrating an example of an overall flow of processing performed by the video processing apparatus according to the embodiment.

The reference video acquisition unit 31 acquires the reference video H(t) (Step S11).

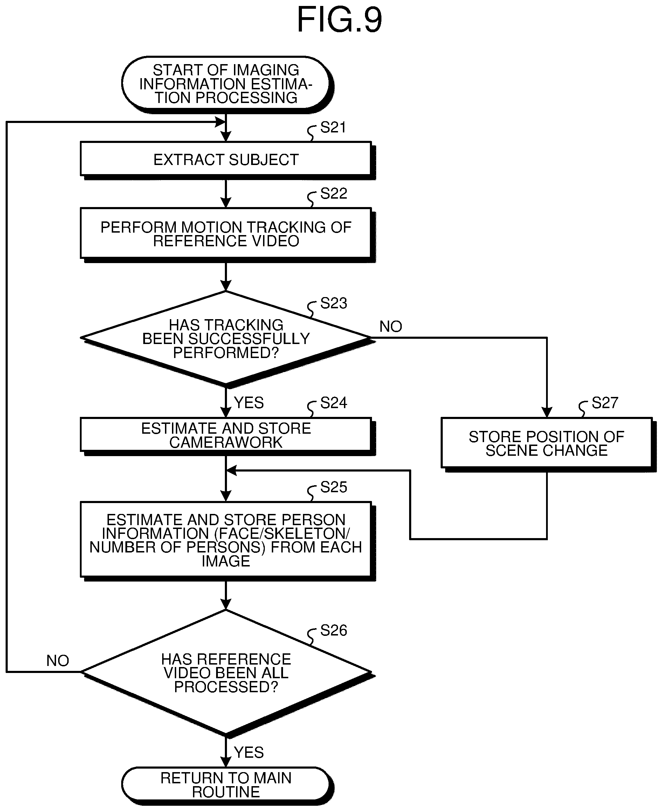

The subject extraction unit 32, the tracking processing unit 33, the person information estimation unit 34, and the camerawork estimation unit 35 cooperate with each other to perform imaging information estimation processing that estimates the camerawork C of the camera 60 that have acquired the reference video H(t), and the arrangement and the posture of the subject 80 captured in the reference video H(t) (Step S12). A detailed flow of the imaging information estimation processing will be described later (see FIG. 9).

The multi-viewpoint image acquisition unit 36 acquires the multi-viewpoint image I(t) of the subject 90 imaged by the cameras 70 and the camera parameters 71 of the cameras 70 (Step S13).

The 3D model generation unit 38 generates the 3D model 90M of the subject 90 from the multi-viewpoint image I(t) and the camera parameters 71 (Step S14).

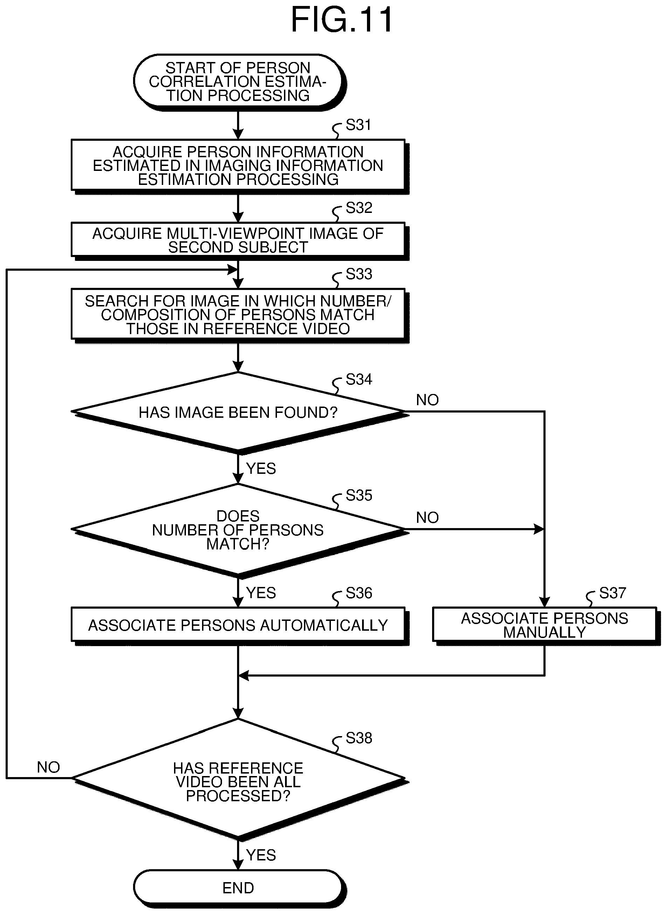

The person correlation estimation unit 37 performs person correlation estimation processing that estimates a correspondence relationship between the arrangement and the posture of the subject 80 estimated by the person information estimation unit 34 and the arrangement and the posture of the subject 90 in the multi-viewpoint image I(t) obtained by imaging the subject 90 from a plurality of viewpoints (Step S15). A detailed flow of the person correlation estimation processing will be described later (see FIG. 11).

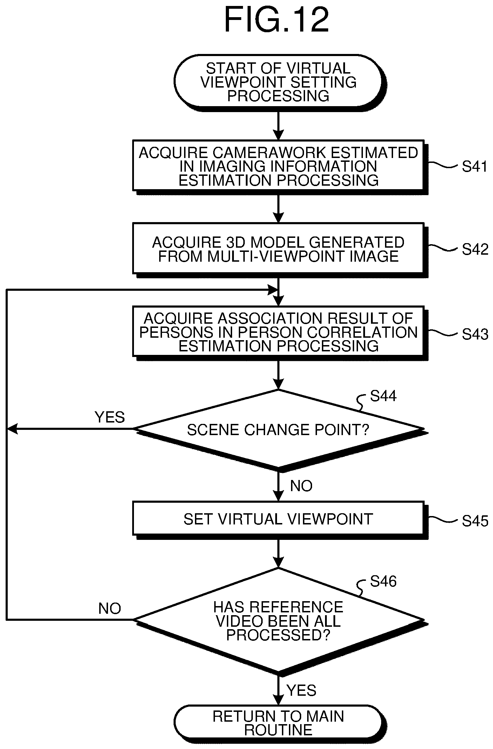

The virtual viewpoint setting unit 39 performs virtual viewpoint setting processing that sets the virtual viewpoint V moving along the camerawork C estimated by the camerawork estimation unit 35, such that the subject 90 is captured in substantially the same arrangement as the arrangement of the subject 80 estimated by the person information estimation unit 34 (Step S16). A detailed flow of the virtual viewpoint setting processing will be described later (see FIG. 12).

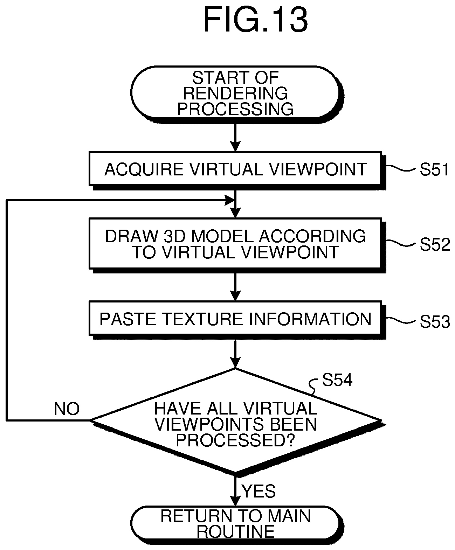

The rendering unit 40 performs rendering processing that renders the virtual image Iv obtained by observing the 3D model 90M of the subject 90 from the virtual viewpoint V set by the virtual viewpoint setting unit 39 (Step S17). A detailed flow of the rendering processing will be described later (see FIG. 13).

### [1-10. Flow of Imaging Information Estimation Processing]

A flow of the imaging information estimation processing will be described with reference to FIG. 9. FIG. 9 is a flowchart illustrating an example of a flow of the imaging information estimation processing performed by the video processing apparatus according to the embodiment.

The subject extraction unit 32 extracts the subject 80 from the images included in the reference video H(t) (Step S21).

The tracking processing unit 33 tracks a region having a similar pixel pattern among a plurality of frame images included in the reference video H(t) and imaged at different times (Step S22). Note that it is desirable to perform the tracking of the region on a region excluding the subject of the frame image included in the reference video H(t).

The tracking processing unit 33 determines whether the tracking has been successfully performed between frame images (Step S23). When it is determined that the tracking has been able to be performed (Step S23: Yes), the process proceeds to Step S24. On the other hand, when it is not determined that the tracking has been able to be performed (Step S23: No), the process proceeds to Step S27.

When it is determined in Step S23 that the tracking has been able to be performed between the frame images, the camerawork estimation unit 35 estimates the camerawork C of the camera 60 that has imaged the reference video H(t) on the basis of the result of tracking by the tracking processing unit 33. Then, the camerawork estimation unit 35 stores the estimated camerawork C in the storage device 28 (see FIG. 3) in association with the reference video H(t) (Step S24).

The person information estimation unit 34 estimates the person information of the subject 80 extracted by the subject extraction unit 32, that is, the arrangement and the posture (face/skeleton) of the subject 80. Then, the person information estimation unit 34 stores the estimated information in the storage device 28 in association with the reference video H(t) (Step S25). Thereafter, the process proceeds to Step S26.

When it is not determined in Step S22 that tracking has been able to be performed between the frame images, the camerawork estimation unit 35 estimates that a scene change occurs, and stores the position of the scene change in the storage device 28 in association with the reference video H(t) (Step S27). Thereafter, the process proceeds to Step S25.

Subsequent to Step S25, the camerawork estimation unit 35 determines whether the reference video H(t) has been all processed (Step S26). When it is determined that the reference video H(t) has been all processed (Step S26: Yes), the process returns to the main routine in FIG. 8. On the other hand, when it is not determined that the reference video H(t) has been all processed (Step S26: No), the process returns to Step S21.

Next, a storage form of information estimated in the imaging information estimation processing will be described with reference to FIG. 10. FIG. 10 is a diagram illustrating an example of a storage form of information estimated by the imaging information estimation processing.

The camerawork C and the person information are stored in the storage device 28 in association with the reference video H(t).

The camerawork C is stored as camerawork C1, C2,..., and Cn by integrating ranges estimated to be uniform camerawork. Time information indicating the start time and the end time of the camerawork and information indicating the content of the camerawork are further added to the storage position indicating each of the camerawork C1, C2,..., and Cn. Furthermore, when the change position of each camerawork is a scene change point, information indicating the scene change point is added. Note that, when the change position of each camerawork is not a scene change point, information indicating the scene change point is not added. Then, the video processing apparatus 10 can refer to the reference video H(t) corresponding to each camerawork on the basis of the stored time information.

The estimated person information is stored as the person information #1, #2,..., and #n by integrating ranges in which the arrangement and the number of persons are the same. Time information indicating the start time and the end time of the range of the person information, information indicating the arrangement, and information indicating the number of persons captured in the screen are further added to the storage position indicating each of the person information #1, #2,..., and #n. Then, the video processing apparatus 10 can refer to the reference video H(t) corresponding to each person information on the basis of the stored time information.

### [1-11. Flow of Person Correlation Estimation Processing]

A flow of the person correlation estimation processing will be described with reference to FIG. 11. FIG. 11 is a flowchart illustrating an example of a flow of the person correlation estimation processing performed by the video processing apparatus according to the embodiment.

The person correlation estimation unit 37 acquires the person information estimated in the imaging information estimation processing from the storage device 28 (Step S31).

The person correlation estimation unit 37 acquires the multi-viewpoint image I(t) acquired by the multi-viewpoint image acquisition unit 36, the subject 90 (second subject) being captured in the multi-viewpoint image I(t) (Step S32).

The person correlation estimation unit 37 searches for an image in which the person information matches the person information in the reference video H(t) from the multi-viewpoint image I(t) (Step S33).

The person correlation estimation unit 37 determines whether an image in which the person information matches the person information in the reference video H(t) has been found from the multi-viewpoint image I(t) (Step S34). When it is determined that an image in which the person information matches has been found (Step S34: Yes), the process proceeds to Step S35. On the other hand, when it is not determined that an image in which the person information matches has been found (Step S34: No), the process proceeds to Step S37.

When it is determined in Step S34 that an image in which the person information matches has been found, the person correlation estimation unit 37 further determines whether the number of persons matches (Step S35). When it is determined that the number of persons matches (Step S35: Yes), the process proceeds to Step S36. On the other hand, when it is not determined that the number of persons matches (Step S35: No), the process proceeds to Step S37.

When it is determined in Step S35 that the number of persons matches, the person correlation estimation unit 37 automatically associates the subject 80 captured in the reference video H(t) with the subject 90 captured in the multi-viewpoint image I(t) (Step S36). Thereafter, the process proceeds to Step S38.

In a case where it is not determined in Step S34 that an image in which the person information matches has been found, or in a case where it is not determined in Step S35 that the number of persons matches, the person correlation estimation unit 37 causes the operator of the video processing apparatus 10 to manually associate the subject 80 captured in the reference video H(t) with the subject 90 captured in the multi-viewpoint image I(t) (Step S37). Thereafter, the process proceeds to Step S38.

Subsequent to Step S36 or Step S37, the person correlation estimation unit 37 determines whether the reference video H(t) has been all processed (Step S38). When it is determined that the reference video H(t) has been all processed (Step S38: Yes), the process returns to the main routine in FIG. 8. On the other hand, when it is not determined that the reference video H(t) has been all processed (Step S38: No), the process returns to Step S33.

### [1-12. Flow of Virtual Viewpoint Setting Processing]

A flow of the virtual viewpoint setting processing will be described with reference to FIG. 12. FIG. 12 is a flowchart illustrating an example of a flow of the virtual viewpoint setting processing performed by the video processing apparatus according to the embodiment.

The virtual viewpoint setting unit 39 acquires the camerawork C estimated in the imaging information estimation processing from the storage device 28 (Step S41) .

The virtual viewpoint setting unit 39 acquires, from the 3D model generation unit 38, the 3D model 90M of the subject 90 generated from the multi-viewpoint image I(t) (Step S42) .

The virtual viewpoint setting unit 39 acquires the association result at the time t between the subject 80 captured in the reference video H(t) and the subject 90 captured in the multi-viewpoint image I(t), the association result being estimated by the person correlation estimation unit 37 (Step S43).

The virtual viewpoint setting unit 39 determines whether the time t is a point where a scene change occurs on the basis of the camerawork C (Step S44). When it is determined that the time t is a point where a scene change occurs (Step S44: Yes), the process returns to Step S43. On the other hand, when it is not determined that the time t is a point where a scene change occurs (Step S44: No), the process returns to Step S45.

When it is not determined in Step S44 that the time t is a point where a scene change occurs, the virtual viewpoint setting unit 39 sets the virtual viewpoint V at the time t so that the subject 90 is captured in the same arrangement as the associated subject 80 (Step S45).

The virtual viewpoint setting unit 39 determines whether the reference video H(t) has been all processed (Step S46). When it is determined that the reference video H(t) has been all processed (Step S46: Yes), the process returns to the main routine in FIG. 8. On the other hand, when it is not determined that the reference video H(t) has been all processed (Step S46: No), the process returns to Step S43.

### [1-13. Flow of Rendering Processing]

A flow of the rendering processing will be described with reference to FIG. 13. FIG. 13 is a flowchart illustrating an example of a flow of the rendering processing performed by the video processing apparatus according to the embodiment.

The rendering unit 40 acquires the virtual viewpoint V set by the virtual viewpoint setting unit 39 (Step S51).

The rendering unit 40 draws the 3D model 90M of the subject 90 according to the virtual viewpoint V (Step S52) .

Furthermore, the rendering unit 40 pastes the texture information T on the drawn 3D model 90M (Step S53).

The rendering unit 40 determines whether all the virtual viewpoints V have been processed (Step S54). When it is determined that all the virtual viewpoints V have been processed (Step S54: Yes), the process returns to the main routine in FIG. 8. On the other hand, when it is not determined that all the virtual viewpoints V have been processed (Step S54: No), the process returns to Step S52.

### [1-14. Effects of Embodiment]

As described above, the video processing apparatus 10 (information processing apparatus) of the present embodiment includes the tracking processing unit 33 (tracking unit) that tracks a region having a similar pixel pattern among a plurality of frame images included in the reference video H(t) (first video) in which the subject 80 (first subject) is captured, and the camerawork estimation unit 35 (first estimation unit) that estimates the camerawork C for the reference video H(t) on the basis of a result of tracking by the tracking processing unit 33.

As a result, with respect to the acquired reference video H(t), it is possible to estimate the camerawork C when the reference video H(t) is imaged.

In addition, the video processing apparatus 10 according to the present embodiment further includes the subject extraction unit 32 (extraction unit) that extracts the subject 80 (first subject) from images included in the reference video H(t) (first video), and the tracking processing unit 33 (tracking unit) tracks a region having a similar pixel pattern on a region excluding the subject 80 in the frame image among the plurality of frame images included in the reference video H(t).

As a result, even when the subject 80 captured in the reference video H(t) moves independently of the camerawork C, the camerawork C can be estimated with high accuracy.

In addition, in the video processing apparatus 10 of the present embodiment, the camerawork estimation unit 35 (first estimation unit) estimates at least one of a change in the viewpoint position, a change in the line-of-sight direction, and a change in the viewing angle at the time of acquiring the reference video H(t) (first video) on the basis of the result of the tracking by the tracking processing unit 33 (tracking unit).

As a result, it is possible to more accurately estimate the camerawork C when the reference video H(t) is imaged.

In addition, in the video processing apparatus 10 of the present embodiment, when the tracking processing unit 33 (tracking unit) cannot track a region having the pixel pattern, the camerawork estimation unit 35 (first estimation unit) determines that a scene change occurs in the reference video H(t) (first video).

As a result, the position of the discontinuous point of the scene in the reference video H(t) can be estimated.

In addition, the video processing apparatus 10 according to the present embodiment includes:
the multi-viewpoint image acquisition unit 36 (acquisition unit) that acquires the multi-viewpoint image I(t) obtained by imaging the subject 90 (second subject) from a plurality of viewpoints;
the 3D model generation unit 38 that generates the 3D model 90M of the subject 90 (second subject) on the basis of the multi-viewpoint image I(t) acquired by the multi-viewpoint image acquisition unit 36;
the person information estimation unit 34 (second estimation unit) that estimates the arrangement and the posture of the subject 80 (first subject) from the frame images included in the reference video H(t) (first video);
the virtual viewpoint setting unit 39 (setting unit) that sets the virtual viewpoint V moving along the camerawork C estimated by the camerawork estimation unit 35 (first estimation unit) such that the subject 90 approaches the arrangement and the posture of the subject 80 estimated by the person information estimation unit 34 (second estimation unit);
and the rendering unit 40 (video generation unit) that generates the virtual image Iv (second video) obtained by observing the 3D model 90M from the virtual viewpoint V set by the virtual viewpoint setting unit 39.

As a result, it is possible to generate the virtual image Iv that imitates the reference video H(t).

In addition, the video processing apparatus 10 of the present embodiment further includes the person correlation estimation unit 37 (correlation estimation unit) that estimates a correspondence relationship between the arrangement and the posture of the subject 80 (first subject) estimated by the person information estimation unit 34 (second estimation unit) and the arrangement and the posture of the subject 90 in the multi-viewpoint image I(t) obtained by imaging the subject 90 (second subject) from a plurality of viewpoints, in which the virtual viewpoint setting unit 39 (setting unit) sets the virtual viewpoint V such that the subject 90 and the subject 80 estimated to be associated with the subject 90 by the person correlation estimation unit 37 are captured at the same position, the same direction, and the same size.

As a result, the virtual viewpoint V can be efficiently set.

In addition, in the video processing apparatus 10 according to the present embodiment, the person correlation estimation unit 37 (correlation estimation unit) estimates a correspondence relationship between the subject 80 and the subject 90 on the basis of the skeleton of the subject 80 (first subject) and the skeleton of the subject 90 (second subject).

As a result, it is possible to easily estimate the correspondence relationship between the subject 80 captured in the reference video H(t) to be imitated and the subject 90 captured in the multi-viewpoint image I(t).

### [1-15. Modification of Embodiment]

The above-described embodiments can be modified into various forms and executed. In the modification of the embodiment described below, in a case where the virtual viewpoint V set by the virtual viewpoint setting unit 39 of the video processing apparatus 10 is in the vicinity of the cameras 70 (70a, 70b,...) that have imaged the subject 90, the camerawork C to be imitated is changed, and the camerawork C passing through the cameras 70 that are in the vicinity of the virtual viewpoint V is generated.

In a case of generating the virtual image Iv in which the 3D model 90M of the subject 90 generated from the multi-viewpoint image I(t) is viewed from the virtual viewpoint V, the virtual image Iv with higher image quality can be generated as the virtual viewpoint V is closer to the installation positions of the cameras 70 that have imaged the multi-viewpoint image I(t). A video processing apparatus 10a (not illustrated) of the modification of the embodiment is characterized in that the camerawork C is changed in a case where the virtual image Iv with higher image quality can be obtained instead of faithfully imitating the camerawork C estimated from the reference video H(t).

A hardware configuration of the video processing apparatus 10a of the modification of the embodiment is the same as the hardware configuration of the video processing apparatus 10 of the above-described embodiment (see FIG. 3). Then, the functional configuration is also substantially the same as the functional configuration described with reference to FIG. 7. Therefore, the reference signs used in the above-described embodiments will be used as they are in the description.

The video processing apparatus 10a includes a virtual viewpoint setting unit 39a (not illustrated) instead of the virtual viewpoint setting unit 39 included in the video processing apparatus 10 of the embodiment. When the virtual viewpoint V moving along the camerawork C estimated by the camerawork estimation unit 35 (first estimation unit) is set such that the subject 90 (second subject) approaches the arrangement and the posture of the subject 80 (first subject) estimated by the person information estimation unit 34 (second estimation unit), in a case where the imaging position of the subject 90 (installation positions of the cameras 70) is in the vicinity of the set virtual viewpoint V, the virtual viewpoint setting unit 39a sets the virtual viewpoint V passing through the imaging position. Note that the virtual viewpoint setting unit 39a is an example of a setting unit in the present disclosure.

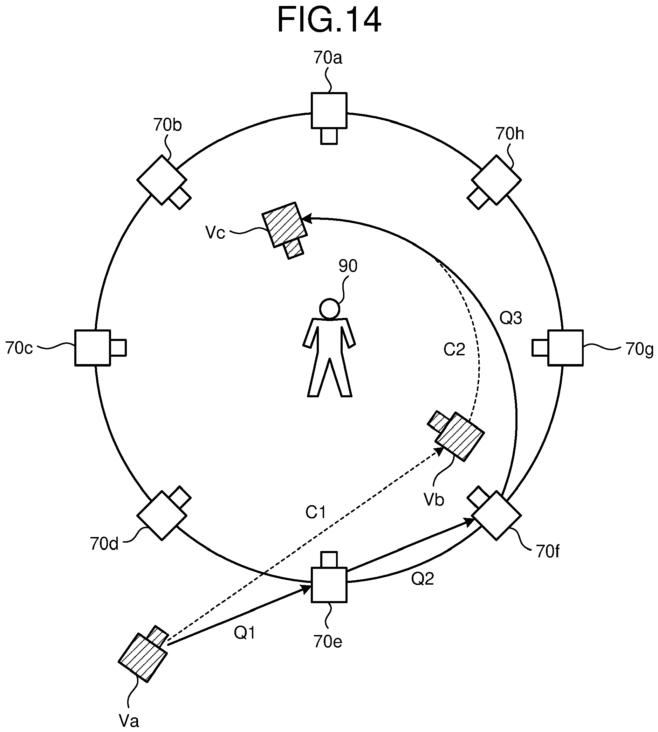

The function of the virtual viewpoint setting unit 39a included in the video processing apparatus 10a will be described with reference to FIG. 14. FIG. 14 is a diagram illustrating processing performed by a video processing apparatus according to a modification of the embodiment.

In FIG. 14, it is assumed that the video processing apparatus 10a sets a virtual viewpoint V moving along camerawork C1 and camerawork C2. That is, it is assumed that camerawork that sequentially traces a virtual viewpoint Va, a virtual viewpoint Vb, and a virtual viewpoint Vc is set. In addition, it is assumed that the multi-viewpoint image I(t) of the subject 90 is imaged by eight cameras (camera 70a to camera 70h).

At this time, the virtual viewpoint setting unit 39a of the video processing apparatus 10a determines whether any of the camera 70a to the camera 70h that have imaged the multi-viewpoint image I(t) exists in the vicinity of the camerawork C1 and the camerawork C2.

Specifically, the virtual viewpoint setting unit 39a calculates the distance between the existence position of each camera, which is known from the camera parameters 71, and the camerawork C1 and the camerawork C2. Then, in a case where the calculated distance is smaller than a predetermined threshold value, the virtual viewpoint setting unit 39a deforms the camerawork C1 or the camerawork C2 so as to pass through the camera.

For example, in FIG. 14, it is assumed that the virtual viewpoint setting unit 39a determines that the distance between the camera 70e and the camerawork C1 is smaller than the threshold value, and the distance between the camera 70f and the camerawork C1 is smaller than the threshold value. At this time, the virtual viewpoint setting unit 39a transforms the camerawork C1 into camerawork Q1 and camerawork Q2. The camerawork Q1 reaches the camera 70e from the virtual viewpoint Va. The camerawork Q2 reaches the camera 70f from the camera 70e.

Furthermore, the virtual viewpoint setting unit 39a transforms the camerawork C2 into camerawork Q3 that reaches the virtual viewpoint Vc from the camera 70f so that the camerawork Q2 and the camerawork C2 are continuous.

That is, in the above-described embodiment, the video processing apparatus 10 sets the camerawork C1 and the camerawork C2, whereas the video processing apparatus 10a of the modification of the embodiment sets the cameraworks Q1, Q2, and Q3.

### [1-16. Effects of Modification of Embodiment]

As described above, in the video processing apparatus 10a according to the modification of the embodiment, in a case where the imaging position of the subject 90 (installation positions of the cameras 70) is in the vicinity of the virtual viewpoint V set by the virtual viewpoint setting unit 39a, the virtual viewpoint setting unit 39a (setting unit) sets the virtual viewpoint V passing through the imaging position.

As a result, the virtual image Iv with higher image quality can be generated.

### (2. Application Examples of Present Disclosure)

### [2-1. Production of Content]

For example, the 3D model 90M of the subject 90 generated by the 3D model generation unit 38 and the 3D model managed by another server may be combined to produce a video content. In addition, for example, in a case where background data exists in an imaging device such as a Lidar, it is possible to create a content as if the subject 90 is at a place indicated by the background data by combining the 3D model 90M of the subject 90 generated by the 3D model generation unit 38 and the background data.

### [2-2. Experience in Virtual Space]

For example, the subject 90 generated by the 3D model generation unit 38 can be arranged in a virtual space that is a place where the user performs communication as an avatar. In this case, the user becomes an avatar and can view the live-action subject 90 in the virtual space.

### [2-3. Communication with Remote Location]

For example, by transmitting the 3D model 90M of the subject 90 generated by the 3D model generation unit 38 from the transmission unit 14 to a remote location, a user at the remote location can view the 3D model 90M of the subject 90 through a reproduction device at the remote location. For example, by transmitting the 3D model 90M of the subject 90 in real time, the subject 90 and the user at the remote location can communicate with each other in real time. For example, a case where the subject 90 is a teacher and the user is a student, a case where the subject 90 is a doctor and the user is a patient, and the like can be assumed.

### [2-4. Others]

For example, it is also possible to generate a free viewpoint video of sports or the like on the basis of the 3D models 90M of a plurality of the subjects 90 generated by the 3D model generation unit 38. In addition, an individual can distribute himself/herself generated by the 3D model generation unit 38 to a distribution platform. As described above, the contents in the embodiments described in the present specification can be applied to various technologies and services.

Although the present disclosure has been described using some embodiments, these embodiments may be executed in any device. In that case, it is sufficient that the device has necessary functional blocks and can obtain necessary information.

In addition, for example, each step of one flowchart may be executed by one device, or may be shared and executed by a plurality of devices. Furthermore, in a case where a plurality of processes is included in one step, the plurality of processes may be executed by one device, or may be shared and executed by a plurality of devices. In other words, a plurality of processes included in one step can also be executed as processes of a plurality of steps. Conversely, the process described as a plurality of steps can be collectively executed as one step.

In addition, for example, in a program executed by the computer, the processes of steps describing the program may be executed in time series in the order described in the present specification, or may be executed in parallel or individually at necessary timing such as when the step is called. That is, as long as there is no contradiction, the process of each step may be executed in an order different from the above-described order. Furthermore, the processing of steps describing the program may be executed in parallel with the processing of another program, or may be executed in combination with the processing of another program.

In addition, for example, a plurality of techniques related to the present technology can be implemented independently as a single body as long as there is no contradiction. Of course, a plurality of any present technologies can be applied and implemented. For example, some or all of the present technology described in any embodiment can be implemented in combination with some or all of the present technology described in other embodiments. In addition, some or all of the above-described any present technology can be implemented in combination with other technologies not described above.

Note that the effects described in the present specification are merely examples and are not limited, and other effects may be provided. In addition, the embodiment of the present disclosure is not limited to the above-described embodiment, and various modifications can be made without departing from the gist of the present disclosure.

In addition, the present disclosure can also have the following configurations, for example.
(1) An information processing apparatus comprising:
   a tracking unit configured to perform tracking of a region having a similar pixel pattern among a plurality of frame images included in a first video in which a first subject is captured; and
   a first estimation unit configured to estimate camerawork for the first video on a basis of a result of the tracking by the tracking unit.
(2) The information processing apparatus according to (1), further comprising
   an extraction unit configured to extract the first subject from frame images included in the first video, wherein
   the tracking unit performs the tracking on a region excluding the first subject in the frame images among the plurality of frame images included in the first video.
(3) The information processing apparatus according to (1) or (2), wherein
   the first estimation unit estimates at least one of a change in a viewpoint position, a change in a line-of-sight direction, and a change in a viewing angle when the first video is acquired on a basis of a result of the tracking by the tracking unit.
(4) The information processing apparatus according to any one of (1) to (3), wherein
   when the tracking unit cannot track a region having the pixel pattern, the first estimation unit determines that a scene change occurs in the first video.
(5) The information processing apparatus according to any one of (1) to (4), further comprising:
   an acquisition unit configured to acquire a multi-viewpoint image obtained by imaging a second subject from a plurality of viewpoints;
   a 3D model generation unit configured to generate a 3D model of the second subject on a basis of the multi-viewpoint image acquired by the acquisition unit;
   a second estimation unit configured to estimate an arrangement and a posture of the first subject from frame images included in the first video;
   a setting unit configured to set a virtual viewpoint that moves along the camerawork estimated by the first estimation unit such that the second subject approaches the arrangement and the posture of the first subject estimated by the second estimation unit; and
   a video generation unit configured to generate a second video obtained by observing the 3D model from the virtual viewpoint set by the setting unit.
(6) The information processing apparatus according to (5), further comprising
   a correlation estimation unit configured to estimate a correspondence relationship between the arrangement and the posture of the first subject estimated by the second estimation unit and the arrangement and the posture of the second subject in the multi-viewpoint image obtained by imaging the second subject from a plurality of viewpoints, wherein
   the setting unit
   sets the virtual viewpoint such that the second subject and the first subject estimated to be associated with the second subject by the correlation estimation unit are captured at the same position, in the same direction, and in the same size.
(7) The information processing apparatus according to (6), wherein
   the correlation estimation unit
   estimates a correspondence relationship between the first subject and the second subject on a basis of a skeleton of the first subject and a skeleton of the second subject.
(8) The information processing apparatus according to (5) or (6), wherein
   in a case where an imaging position of the second subject is in a vicinity of the virtual viewpoint set by the setting unit, the setting unit sets a virtual viewpoint that passes through the imaging position.
(9) An information processing method comprising:
   a tracking step of performing tracking of a region having a similar pixel pattern among a plurality of frame images included in a first video in which a first subject is captured; and
   a first estimation step of estimating camerawork for the first video on a basis of a result of the tracking by the tracking step.
(10) A program causing a computer to function as:
   a tracking unit configured to perform tracking of a region having a similar pixel pattern among a plurality of frame images included in a first video in which a first subject is captured; and
   a first estimation unit configured to estimate camerawork for the first video on a basis of a result of the tracking by the tracking unit.

### Reference Signs List

10, 10a VIDEO PROCESSING APPARATUS (INFORMATION PROCESSING APPARATUS)
31 REFERENCE VIDEO ACQUISITION UNIT
32 SUBJECT EXTRACTION UNIT (EXTRACTION UNIT)
33 TRACKING PROCESSING UNIT (TRACKING UNIT)
34 PERSON INFORMATION ESTIMATION UNIT (SECOND ESTIMATION UNIT)
35 CAMERAWORK ESTIMATION UNIT (FIRST ESTIMATION UNIT)
36 MULTI-VIEWPOINT IMAGE ACQUISITION UNIT (ACQUISITION UNIT)
37 PERSON CORRELATION ESTIMATION UNIT (CORRELATION ESTIMATION UNIT)
38 3D MODEL GENERATION UNIT
39, 39a VIRTUAL VIEWPOINT SETTING UNIT (SETTING UNIT)
40 RENDERING UNIT (VIDEO GENERATION UNIT)
60, 70, 70a, 70b, 70c, 70e, 70f, 70h CAMERA
71, 71a, 71b, 71c CAMERA PARAMETER
80 SUBJECT (FIRST SUBJECT)
80a, 80b, 90a, 90b PERSON
90 SUBJECT (SECOND SUBJECT)
90M, 90Ma, 90Mb 3D MODEL
C, C1, C2, Q1, Q2, Q3 CAMERAWORK
F1, F2, F3, F4, F5 FRAME IMAGE
H(t) REFERENCE VIDEO (FIRST VIDEO)
I(t) MULTI-VIEWPOINT IMAGE
Ia(t), Ib(t), Ic(t) TWO-DIMENSIONAL IMAGE
Iv, Iva, Ivb VIRTUAL IMAGE (SECOND VIDEO)
M POLYGON MESH DATA
T TEXTURE INFORMATION
V, Va, Vb, Vc VIRTUAL VIEWPOINT

## Claims

1. An information processing apparatus comprising:
a tracking unit configured to perform tracking of a region having a similar pixel pattern among a plurality of frame images included in a first video in which a first subject is captured; and
a first estimation unit configured to estimate camerawork for the first video on a basis of a result of the tracking by the tracking unit.

2. The information processing apparatus according to claim 1, further comprising
an extraction unit configured to extract the first subject from frame images included in the first video, wherein
the tracking unit performs the tracking on a region excluding the first subject in the frame images among the plurality of frame images included in the first video.

3. The information processing apparatus according to claim 1, wherein
the first estimation unit estimates at least one of a change in a viewpoint position, a change in a line-of-sight direction, and a change in a viewing angle when the first video is acquired on a basis of a result of the tracking by the tracking unit.

4. The information processing apparatus according to claim 1, wherein
when the tracking unit cannot track a region having the pixel pattern, the first estimation unit determines that a scene change occurs in the first video.

5. The information processing apparatus according to claim 1, further comprising:
an acquisition unit configured to acquire a multi-viewpoint image obtained by imaging a second subject from a plurality of viewpoints;
a 3D model generation unit configured to generate a 3D model of the second subject on a basis of the multi-viewpoint image acquired by the acquisition unit;
a second estimation unit configured to estimate an arrangement and a posture of the first subject from frame images included in the first video;
a setting unit configured to set a virtual viewpoint that moves along the camerawork estimated by the first estimation unit such that the second subject approaches the arrangement and the posture of the first subject estimated by the second estimation unit; and
a video generation unit configured to generate a second video obtained by observing the 3D model from the virtual viewpoint set by the setting unit.

6. The information processing apparatus according to claim 5, further comprising
a correlation estimation unit configured to estimate a correspondence relationship between the arrangement and the posture of the first subject estimated by the second estimation unit and the arrangement and the posture of the second subject in the multi-viewpoint image obtained by imaging the second subject from a plurality of viewpoints, wherein
the setting unit
sets the virtual viewpoint such that the second subject and the first subject estimated to be associated with the second subject by the correlation estimation unit are captured at the same position, in the same direction, and in the same size.

7. The information processing apparatus according to claim 6, wherein
the correlation estimation unit
estimates a correspondence relationship between the first subject and the second subject on a basis of a skeleton of the first subject and a skeleton of the second subject.

8. The information processing apparatus according to claim 5, wherein
in a case where an imaging position of the second subject is in a vicinity of the virtual viewpoint set by the setting unit, the setting unit sets a virtual viewpoint that passes through the imaging position.

9. An information processing method comprising:
a tracking step of performing tracking of a region having a similar pixel pattern among a plurality of frame images included in a first video in which a first subject is captured; and
a first estimation step of estimating camerawork for the first video on a basis of a result of the tracking by the tracking step.

10. A program causing a computer to function as:
a tracking unit configured to perform tracking of a region having a similar pixel pattern among a plurality of frame images included in a first video in which a first subject is captured; and
a first estimation unit configured to estimate camerawork for the first video on a basis of a result of the tracking by the tracking unit.
